# EUROPÄISCHE PATENTSCHRIFT

(11) **EP 2 889 930 B1**
(45) Veröffentlichungstag und Bekanntmachung des Hinweises auf die Patenterteilung: **02.09.2020**
(21) Anmeldenummer: 14195889.2
(22) Anmeldetag: 02.12.2014
(51) Int. Cl.: H01M 2/02, H01M 10/44, H01M 10/46

(54) **TRAKTIONSBATTERIE MIT BREMSWIDERSTANDSAUFLADEGERÄT**
TRACTION BATTERY WITH INCORPORATED REGENERATIVE BRAKE CHARGING DEVICE
BATTERIE DE TRACTION AVEC DISPOSITIF DE RECHARGE DE FREINAGE RÉGÉNÉRATIF INTÉGRÉ.

(30) Priorität: 27.12.2013 DE 102013114894
(43) Veröffentlichungstag der Anmeldung: 01.07.2015
(73) Patentinhaber: STILL GmbH, 22113 Hamburg (DE)
(72) Erfinder: Brücher, Bernd, 22119 Hamburg (DE); Gütschow, Raphaela, 22041 Hamburg (DE)
(74) Vertreter: Patentship Patentanwaltsgesellschaft mbH

(56) Entgegenhaltungen:
- EP-A1- 0 808 738
- EP-A1- 1 698 507
- EP-A1- 2 056 391
- EP-A1- 2 654 119
- EP-A2- 0 713 101
- EP-A2- 0 913 288
- WO-A2-2008/137248
- AU-B2- 545 765
- US-A- 5 055 656
- US-A1- 2010 019 718

## Beschreibung

Die Erfindung betrifft eine Traktionsbatterie für eine batterie-elektrisch angetriebene mobile Arbeitsmaschine, insbesondere ein Flurförderzeug, die als Hochleistungsbatterie ausgebildet ist und einen Batterietrog aufweist, innerhalb dessen Module angeordnet sind, die jeweils aus mindestens einer Batteriezelle aufgebaut sind, wobei in die Traktionsbatterie ein als Leistungswiderstand ausgebildeter Bremswiderstand integriert ist, wobei die Traktionsbatterie eine Lithium-Ionenbatterie ist.

Für den Betrieb von batterie-elektrisch angetriebenen mobilen Arbeitsmaschinen, insbesondere Flurförderzeugen, wie etwa beispielsweise Gabelstaplern, kommen Traktionsbatterien zum Einsatz, die im Regelfall als austauschbare Batterien in ein Batteriefach eingesetzt werden können und, sobald Sie entladen sind, gegen eine aufgeladene Traktionsbatterie ersetzt werden können. Bisher sind solche Traktionsbatterien im Regelfall Blei-Säureakkumulatoren bzw. Blei-Säurebatterien, bei denen eine chemische Reaktion zwischen Schwefelsäure und Blei zur Speicherung der elektrischen Energie dient. Bei solchen bekannten Blei-Säurebatterien ist es über den gesamten Temperaturbereich, der beim Betrieb eines Flurförderzeugs auftreten kann, möglich, Energie der Traktionsbatterie zu entnehmen oder die Traktionsbatterie aufzuladen, beispielsweise bei der Rekuperation bzw. dem elektrischen Bremsen.

Aus der EP 2 654 119 A1 ist eine Traktionsbatterie für eine batterie-elektrisch angetriebene mobile Arbeitsmaschine, insbesondere ein Flurförderzeug, bekannt, die als Blei-Säurebatterie ausgebildet ist.

Durch neuere Technologien können inzwischen Batterien bzw. Akkumulatoren hergestellt werden und auch im industriellen Einsatz verwendet werden, die bessere Leistungsdaten bieten. Solche Batterien kann man als Hochleistungsbatterien bezeichnen, die sich dadurch auszeichnen, dass sie gegenüber einer Blei-Säurebatterie eine höhere Energiedichte in Bezug auf Gewicht und/oder Volumen aufweisen und eine andere Technik als eine Blei-Säure-Reaktion für die Energiespeicherung nutzen. Hinzu kommt bei vielen Hochleistungsbatterien als Merkmal, dass eine große Leistung beim Entladen abgegeben werden kann und/oder mit großer Leistung geladen werden kann. Die typischen Energiedichten in Bezug auf Gewicht und/oder Volumen liegen bei einer Hochleistungsbatterie dabei mindestens für einen der beiden Werte oberhalb und außerhalb der entsprechenden Kenngrößen für Blei-Säurebatterien.

Bereits Nickel-Cadmium Batterien weisen zwar keinen erheblichen Gewichtsvorteil auf, haben jedoch eine höhere Energiedichte in Bezug auf das Volumen. Weitere bekannte Technologien für Akkumulatoren bzw. wieder aufladbare Batterien unter Einsatz von Nickel sind beispielsweise Nickel-Metallhydrid, Nickel-Eisen, Nickel-Wasserstoff, Nickel-Zink und Silber-Zink. Daneben sind auch Natrium-Nickelchlorid und Natrium-Schwefel Akkumulatoren bekannt.

Zunehmend in größerem Umfang eingesetzt werden jedoch Lithium-Ionenbatterien, die eine in Serie anwendbare Zuverlässigkeit erreicht haben, sich durch hohe Energiedichte auszeichnen und nur einem geringen Memoryeffekt unterliegen sowie ein Entladen der Batterie bzw. Aufladen der Batterie mit großer Leistung ermöglichen. Bei der Lithium-Ionenbatterie sind ebenfalls unterschiedliche Technologien bekannt, wie beispielsweise Lithium-Polymer, Lithium-Kobaltdioxid, Lithium-Luft, Lithium-Titanat, Lithium-Eisenphosphat, Lithium-Mangan und Zinn-Schwefel-Lithiumionen.

Besonders vorteilhaft ist der Einsatz solcher Hochleistungsbatterien bei Fahrzeugen und beispielsweise Flurförderzeugen, da aufgrund der hohen Energiedichte in Bezug auf das Volumen bei dem vorgegebenen Bauraum für die Batterie eine größere Menge elektrische Energie gespeichert werden kann und somit die Reichweite eines Fahrzeugs bzw. die Einsatzdauer des Flurförderzeugs vergrößert werden kann.

Bei solchen Hochleistungsbatterien sind zusätzliche Sicherheitsmaßnahmen und Maßnahmen zur Regelung im Betrieb erforderlich. Es werden daher Überwachungs-und Steuerungsvorrichtungen vorgesehen, die unter dem Begriff Batteriemanagementsystem zusammengefasst werden. Dieses Batteriemanagementsystem überwacht den Zustand einzelner Batteriezellen bzw. Module und der Hochleistungsbatterie insgesamt.

Nachteilig bei solchen Hochleistungsbatterien und insbesondere bei Lithium-Ionenbatterien ist, dass diese speziell bei diesen Temperaturen ein abweichendes Betriebsverhalten gegenüber Blei-Säurebatterien aufweisen. Der mögliche Rückspeisestrom in die Traktionsbatterie ist bei tiefen Temperaturen bedingt durch die chemischen Prozesse begrenzt. Um die volle Ladefähigkeit bzw. Rekuperationsfähigkeit der Traktionsbatterie bei tiefen Umgebungstemperaturen zu erreichen, ist es daher bekannt, eine Temperaturregelung für die Traktionsbatterie, insbesondere eine Beheizung vorzusehen, durch die die Traktionsbatterie geregelt auf einer definierten Temperatur gehalten wird. Dies ist jedoch relativ aufwändig, teuer und erfordert eventuell weitere Anschlüsse der Traktionsbatterie, etwa an einen Flüssigkeits-Wärmetauscherkreis. Gerade bei kleineren Traktionsbatterie von Flurförderzeugen kann es aufgrund des ungünstigen Verhältnisses von Oberfläche zu Volumen bei einem Abstellen im Freien bei niedrigen Temperaturen sehr schnell zu einer niedrigen Temperatur der Traktionsbatterie kommen.

Für das Fahrverhalten eines Flurförderzeugs ist es auch wünschenswert, dass stets ein gleich hoher Rekuperationsstrom von dem Fahrantrieb eines Flurförderzeugs bei einem Bremsen abgegeben werden kann und ein Fahrer sich immer dem gleichen Abbremsverhalten des Fahrzeugs gegenübersieht. Sofern die Traktionsbatterie daher einen Rekuperationsstrom nicht aufnehmen kann, muss daher der zusätzliche Aufwand getrieben werden, dass ein Brems- oder Leistungswiderstand mit einer zusätzlichen Leistungsansteuerung in das Flurförderzeug integriert wird, wie dies aus dem Stand der Technik zur Vernichtung der Bremsenergie bekannt ist, um auch bei niedrigen Umgebungstemperaturen elektrisches Bremsen zu ermöglichen.

Bekannt ist weiterhin auch, eine elektrische Beheizung der Hochleistungsbatterie vorzusehen, die jedoch teuer ist, zusätzlichen Bauchraum benötigt und zu einem unerwünschten Energieverbrauch führt.

Da eine Hochleistungsbatterie in vollgeladenen Zustand noch in viel geringerem Maße als eine herkömmliche Blei-Säurebatterien auch nur kurzzeitig weiteren Strom aufnehmen kann, besteht auch das Problem, dass direkt nach einer Inbetriebnahme eines Flurförderzeugs mit einer vollgeladenen Hochleistungsbatterie auch bei richtiger Betriebstemperatur der Traktionsbatterie diese keinen Rekuperationsstrom aufnehmen kann.

Aus der US 2010/019718 A1 ist ein Schienenfahrzeug mit einem als Leistungswiderstand ausgebildeten Bremswiderstand bekannt, dem beim elektrischen Bremsen ein Rekuperationsstrom zugeführt wird. Der Bremswiderstand ist zur verbesserten Luftkühlung und Wärmeabfuhr in einem Dachbereich eines Maschinengehäuses des Schienenfahrzeugs angeordnet und bildet somit einen Bestandteil des Fahrzeugs.

Aus der WO 2008/137248 A2 ist ein Fahrzeug mit einem Bremswiderstand offenbart, dem beim elektrischen Bremsen ein Rekuperationsstrom zugeführt wird. Der Bremswiderstand ist ein Bestandteil eines Fahrantriebssystems.

Aus der US 5 055 656 A ist ein Fahrzeug mit einer Starterbatterie bekannt, die von einer Lichtmaschine geladen wird. Angrenzend an die Starterbatterie ist ein Heizwiderstand im Fahrzeug verbaut, mit dem die Starterbatterie aufgeheizt werden kann, wenn deren Temperatur zu niedrig ist. Zum Betrieb des Heizelements und somit zum Aufheizen der Starterbatterie auf ein gewünschtes Temperaturniveau wird ein Überschussstrom der Lichtmaschine verwendet.

Der vorliegenden Erfindung liegt daher die Aufgabe zugrunde, eine Traktionsbatterie zur Verfügung zu stellen, die die zuvor genannten Nachteile vermeidet und bei der möglichst in jedem Betriebszustand und bei jeder Betriebstemperatur ein Rekuperationsstrom aufgenommen werden kann.

Diese Aufgabe wird durch eine Traktionsbatterie mit den Merkmalen des unabhängigen Patentanspruchs 1 gelöst. Vorteilhafte Weiterbildungen der Erfindung sind in den Unteransprüchen angegeben.

Die Aufgabe wird erfindungsgemäß dadurch gelöst, dass ein durch elektrisches Bremsen entstehender Rekuperationsstrom in jedem Fall zu der Traktionsbatterie geleitet werden kann und durch ein Batteriemanagementsystem automatisch eine Aufteilung in mögliche Ladung der Traktionsbatterie und Umleitung in den Bremswiderstand erfolgt, wobei ein Teil oder der gesamte Rekuperationsstrom, der von der Traktionsbatterie nicht durch Aufladen der Module bzw. Batteriezellen aufgenommen werden kann, in den Bremswiderstand geleitet wird.

Indem ein Leistungswiderstand, hier auch bezeichnet als Bremswiderstand, in die Traktionsbatterie integriert ist, besteht die Möglichkeit, dass immer in einem Betriebszustand, in dem die Traktionsbatterie einen von außen zugeleiteten Ladestrom, insbesondere einen Rekuperationsstrom beim Bremsbetrieb eines Flurförderzeugs, nicht aufnehmen kann, dieser Strom in den Bremswiderstand geleitet wird. Dabei kann ein Teil oder der gesamte Rekuperationsstrom, der von der Traktionsbatterie nicht durch Aufladen der Module bzw. Batteriezellen aufgenommen werden kann, in den Bremswiderstand geleitet werden. Dies kann beispielsweise der Fall sein, wenn aufgrund einer niedrigen Betriebstemperatur der Hochleistungsbatterie die einzelnen Module nicht in vollem Maße aufnahmefähig sind. Ebenso ist es denkbar, dass direkt nach Inbetriebnahme einer voll aufgeladenen Traktionsbatterie, wenn es zu einer Rekuperation kommt, ein Ladestrom nicht aufgenommen werden kann, da Hochleistungsbatterien nicht überladen werden dürfen. In einem solchen Fall kann kurzzeitig ebenfalls der Strom in den Bremswiderstand geleitet werden. Im Regelfall ist dies auch möglich, wenn die Traktionsbatterie sich bei normaler Betriebstemperatur befindet, da diese eine große Masse insgesamt aufweist und eine Zeitkonstante der Erwärmung bzw. Abgabe der Wärme so groß ist, dass eine kurzzeitige Aufnahme der Energiemenge als Wärme möglich ist. Wenn eine Hochleistungsbatterie als Traktionsbatterie anstatt einer Blei-Säurebatterien eingesetzt wird, ergibt sich der Vorteil, dass keinerlei Veränderungen des Betriebsverhaltens für einen Fahrer oder Bediener bemerkbar sind, da durch die Integration eines Bremswiderstandes in die Traktionsbatterie vergleichbar wie bei einer Blei-Säurebatterien in allen Betriebszuständen ein Rekuperationsstrom aufgenommen werden kann. Es sind keine speziellen Anpassungen des Flurförderzeugs für einen Betrieb mit einer Hochleistungsbatterie erforderlich, insbesondere muss kein Leistungswiderstand als Bremswiderstand in das Fahrzeug integriert werden, der regelmäßig eine zusätzliche Kühlung, etwa eine Wasserkühlung erfordern würde. Der Rekuperationsstrom kann über die normalen Leistungsanschlüsse der Traktionsbatterie zu dem Bremswiderstand geleitet werden. Der Batterietrog kann dabei jede Form eines oben offenen Gehäuses sein, wobei durch einen Deckel auch ein vollständig geschlossenes Gehäuse gebildet werden kann.

Das Batteriemanagementsystem, das Überwachungs- und Steuerungsvorrichtungen für die Module umfasst, leitet den Rekuperationsstrom in den Bremswiderstand.

Durch ein solches Batteriemanagementsystem wird beispielsweise auch eine Überladung einer Hochleistungsbatterie verhindert und bei ungünstigen Betriebszuständen nur eine maximal zulässige Ladung erlaubt. Wenn das Batteriemanagementsystem selbstständig einen Überschuss an Rekuperationsstrom in den Bremswiderstand umleitet und diesen dadurch ansteuert, ergibt sich eine Vereinfachung einer Steuerung des Flurförderzeugs bzw. der mobilen Arbeitsmaschine. Ein durch elektrisches Bremsen entstehender Rekuperationsstrom kann in jedem Fall zu der Traktionsbatterie geleitet werden und durch das Batteriemanagementsystem erfolgt automatisch eine Aufteilung in mögliche Ladung der Traktionsbatterie und Umleitung in den Bremswiderstand.

In einer günstigen Weiterbildung der Traktionsbatterie leitet das Batteriemanagementsystem den Rekuperationsstrom in den Bremswiderstand temperaturabhängig, insbesondere bei einer zu niedrigen Betriebstemperatur der Traktionsbatterie.

Wenn aufgrund von niedrigen Temperaturen die Traktionsbatterie diese nur beschränkt aufnahmefähig ist, kann dadurch eine schnelle Erwärmung der Traktionsbatterie und Herstellung der vollen Leistungsfähigkeit erreicht werden.

Vorteilhaft leitet das Batteriemanagementsystem bei zu niedriger Betriebstemperatur der Traktionsbatterie in den Bremswiderstand Strom aus der Traktionsbatterie, um diese aufzuheizen.

Vorteilhaft kann dadurch eine eigene Heizvorrichtung der Traktionsbatterie entfallen und es kann rasch die volle Leistungsfähigkeit, insbesondere auch der maximal mögliche Entladestrom erreicht werden, indem die Traktionsbatterie rasch auf Betriebstemperatur gebracht wird.

In einer günstigen Ausgestaltung ist der Bremswiderstand innerhalb des Batterietrogs und thermisch mit dem Batterietrog verbunden angeordnet ist.

Vorteilhaft ist der Bremswiderstand auf einer Seitenwand des Batterietrogs montiert.

Der Batterietrog besteht zumeist aus einem Stahlgehäuse und weist daher eine hohe Aufnahmefähigkeit für Wärme auf. Weiterhin kann über das Metall die Wärme auf eine große Fläche verteilt und abgegeben werden.

Der Bremswiderstand kann anstelle der Position eines Moduls angeordnet sein.

Vorteilhaft sind zwei oder mehr Bremswiderstände vorhanden, die verteilt in der Traktionsbatterie innerhalb des Batterietrogs angeordnet sind.

Dadurch kann die Wärme innerhalb der Traktionsbatterie breiter verteilt werden, insbesondere auch auf eine Mehrzahl von Module. Durch die Aufteilung auf mehrere Bremswiderstände wird auch die Integration in die Traktionsbatterie erleichtert. Es ist auch eine Aufspaltung in Leistungsklassen möglich, wodurch sich der Wärmeeintrag die Traktionsbatterie in Abhängigkeit von dem Betriebszustand weiter optimieren lässt. Dies ist auch einfacher und weniger störanfällig anzusteuern. Es ist dabei theoretisch auch denkbar, Bremswiderstände außerhalb oder an der Außenseite des Batterietrogs anzuordnen. Jedoch ist eine Anordnung im Inneren vorteilhaft und zu bevorzugen, da diese dann mechanisch geschützt sind.

Die Ansteuerung des oder der Bremswiderstände als Leistungswiderstand kann mit IGBTs erfolgen, jedoch ist auch eine Ansteuerung über MosFets in Brückentechnik als Leistungsschaltelemente denkbar. Es ist weiter denkbar, durch eine zusätzliche Integration einer Induktivität, insbesondere von Induktionsspulen, einen Schwingkreis zu bilden, mit dem Rückwirkungen des Stromflusses in den Bremswiderstand vermieden werden können.

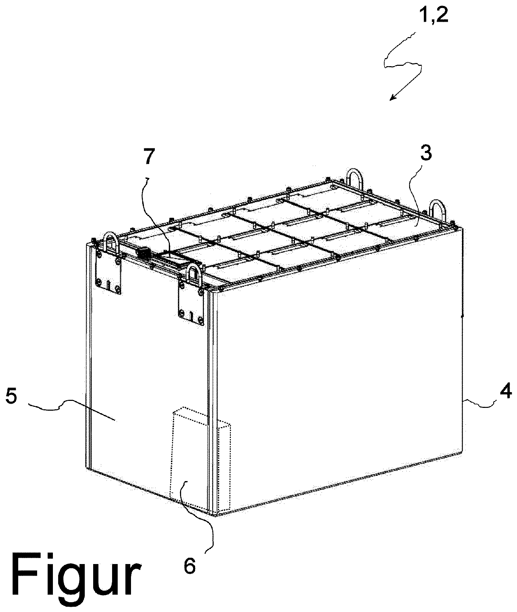

Weitere Vorteile und Einzelheiten der Erfindung werden anhand des in der schematischen Figur dargestellten Ausführungsbeispiels näher erläutert. Hierbei zeigt die Figur eine Traktionsbatterie 1, die als Hochleistungsbatterie 2 ausgebildet ist und Module 3 in einem Batterietrog 4 aufweist. An einer Seitenwand 5 ist auf der Innenseite in dem Batterietrog 4 ein Bremswiderstand 6 angeordnet, der durch ein Batteriemanagementsystem 7 angesteuert wird.

Wenn über nicht dargestellte Leistungsanschlüsse bei einem elektrischen Bremsen einer mobilen Arbeitsmaschine Rekuperationsstrom in die Traktionsbatterie 1 zurückgeleitet wird und dieser nicht durch die Module 3 aufgenommen werden kann, da beispielsweise die Betriebstemperatur der Traktionsbatterie 1 zu niedrig liegt, leitet das Batteriemanagementsystem 7 den überschüssigen Anteil des Stroms oder den gesamten Rekuperationsstrom in den Bremswiderstand 6 um, der über den Batterietrog 4 dadurch die Traktionsbatterie 1 insgesamt erwärmt.

## Patentansprüche

1. Traktionsbatterie (1) für eine batterie-elektrisch angetriebene mobile Arbeitsmaschine, insbesondere ein Flurförderzeug, die als Hochleistungsbatterie (2) ausgebildet ist und einen Batterietrog (4) aufweist, innerhalb dessen Module (3) angeordnet sind, die jeweils aus mindestens einer Batteriezelle aufgebaut sind, wobei in die Traktionsbatterie (1) ein als Leistungswiderstand ausgebildeter Bremswiderstand (6) integriert ist, wobei die Traktionsbatterie (1) eine Lithium-Ionenbatterie ist,
**dadurch gekennzeichnet,**
**dass** ein durch elektrisches Bremsen entstehender Rekuperationsstrom in jedem Fall zu der Traktionsbatterie (1) geleitet werden kann und durch ein Batteriemanagementsystem (7) automatisch eine Aufteilung in mögliche Ladung der Traktionsbatterie (1) und Umleitung in den Bremswiderstand (6) erfolgt, wobei ein Teil oder der gesamte Rekuperationsstrom, der von der Traktionsbatterie (1) nicht durch Aufladen der Module (3) bzw. Batteriezellen aufgenommen werden kann, in den Bremswiderstand (6) geleitet wird.

2. Traktionsbatterie nach Anspruch 1,
**dadurch gekennzeichnet,**
**dass** das Batteriemanagementsystem (7), das Überwachungs- und Steuerungsvorrichtungen für die Module (3) umfasst, den Rekuperationsstrom in den Bremswiderstand (6) leitet.

3. Traktionsbatterie nach Anspruch 2,
**dadurch gekennzeichnet,**
**dass** das Batteriemanagementsystem (7) den Rekuperationsstrom in den Bremswiderstand (6) temperaturabhängig leitet, insbesondere bei einer zu niedrigen Betriebstemperatur der Traktionsbatterie (1).

4. Traktionsbatterie nach Anspruch 2 oder 3,
**dadurch gekennzeichnet,**
**dass** das Batteriemanagementsystem (7) bei zu niedriger Betriebstemperatur der Traktionsbatterie in den Bremswiderstand (6) Strom aus der Traktionsbatterie (1) leitet, um diese aufzuheizen.

5. Traktionsbatterie nach einem der Ansprüche 1 bis 4,
**dadurch gekennzeichnet,**
**dass** der Bremswiderstand (6) innerhalb des Batterietrogs (4) und thermisch mit dem Batterietrog (4) verbunden angeordnet ist.

6. Traktionsbatterie nach Anspruch 5,
**dadurch gekennzeichnet,**
**dass** der Bremswiderstand (6) auf einer Seitenwand (5) des Batterietrogs (4) montiert ist.

7. Traktionsbatterie nach einem der Ansprüche 1 bis 6,
**dadurch gekennzeichnet,**
**dass** der Bremswiderstand (6) anstelle der Position eines Moduls (3) angeordnet ist.

8. Traktionsbatterie nach einem der Ansprüche 1 bis 7,
**dadurch gekennzeichnet,**
**dass** zwei oder mehr Bremswiderstände (6) vorhanden sind, die verteilt in der Traktionsbatterie (1) innerhalb des Batterietrogs (4) angeordnet sind.

## Claims

1. Traction battery (1) for a battery-electric powered mobile working machine, in particular an industrial truck, which is configured as a high-power battery (2) and has a battery tray (4) within which modules (3) are arranged, which modules are each constructed from at least one battery cell, wherein a braking resistor (6) which is configured as a power resistor is integrated into the traction battery (1), wherein the traction battery (1) is a lithium-ion battery,
**characterized**
**in that** a recuperation current which is generated by electric braking can be conducted to the traction battery (1) in each case and division between possible charging of the traction battery (1) and diversion into the braking resistor (6) is automatically performed by a battery management system (7), wherein a portion or all of the recuperation current which cannot be received by the traction battery (1) by charging of the modules (3) or battery cells, is conducted into the braking resistor (6) .

2. Traction battery according to Claim 1,
**characterized**
**in that** the battery management system (7), which comprises monitoring and control apparatuses for the modules (3), conducts the recuperation current into the braking resistor (6).

3. Traction battery according to Claim 2,
**characterized**
**in that** the battery management system (7) conducts the recuperation current into the braking resistor (6) in a temperature-dependent manner, in particular in the case of an excessively low operating temperature of the traction battery (1).

4. Traction battery according to Claim 2 or 3,
**characterized**
**in that** the battery management system (7) conducts current out of the traction battery (1) into the battery resistor (6) in the case of an excessively low operating temperature of the traction battery in order to heat up the said traction battery.

5. Traction battery according to one of Claims 1 to 4,
**characterized in that** the battery resistor (6) is arranged within the battery tray (4) and in a manner thermally connected to the battery tray (4).

6. Traction battery according to Claim 5,
**characterized**
**in that** the braking resistor (6) is mounted on a side wall (5) of the battery tray (4).

7. Traction battery according to one of Claims 1 to 6,
**characterized**
**in that** the braking resistor (6) is arranged in place of the position of a module (3).

8. Traction battery according to one of Claims 1 to 7,
**characterized**
**in that** two or more braking resistors (6), which are arranged in a manner distributed in the traction battery (1) within the battery tray (4), are present.

## Revendications

1. Batterie de traction (1) pour une machine de travail mobile à propulsion électrique par batterie, notamment un chariot de manutention, laquelle est réalisée sous la forme d'une batterie de forte puissance (2) et possède une auge de batterie (4) à l'intérieur de laquelle sont disposés des modules (3) qui sont respectivement constitués d'au moins une cellule de batterie, une résistance de frein (6) réalisée sous la forme d'une résistance de puissance étant intégrée dans la batterie de traction (1), la batterie de traction (1) étant une batterie aux ions de lithium,
**caractérisée en ce que**
un courant de récupération produit par le freinage électrique peut dans tous les cas être conduit vers la batterie de traction (1) et une répartition en une charge possible de la batterie de traction (1) et une dérivation dans la résistance de frein (6) est réalisée automatiquement par un système de gestion de batterie (7), une partie ou la totalité du courant de récupération qui ne peut pas être absorbée par la batterie de traction (1) par la charge des modules (3) ou des cellules de batterie étant conduite dans la résistance de frein (6).

2. Batterie de traction selon la revendication 1, **caractérisée en ce que** le système de gestion de batterie (7), qui comprend des dispositifs de surveillance et de commande pour les modules (3), conduit le courant de récupération dans la résistance de frein (6).

3. Batterie de traction selon la revendication 2, **caractérisée en ce que** le système de gestion de batterie (7) conduit le courant de récupération dans la résistance de frein (6) en fonction de la température, notamment en présence d'une faible température de fonctionnement de la batterie de traction (1).

4. Batterie de traction selon la revendication 2 ou 3, **caractérisée en ce que** le système de gestion de batterie (7), en présence d'une température de fonctionnement trop basse de la batterie de traction dans la résistance de frein (6), conduit le courant hors de la batterie de traction (1) afin de chauffer celle-ci.

5. Batterie de traction selon l'une des revendications 1 à 4, **caractérisée en ce que** la résistance de frein (6) est disposée à l'intérieur de l'auge de batterie (4) et reliée thermiquement à l'auge de batterie (4).

6. Batterie de traction selon la revendication 5, **caractérisée en ce que** la résistance de frein (6) est montée sur une paroi latérale (5) de l'auge de batterie (4) .

7. Batterie de traction selon l'une des revendications 1 à 6, **caractérisée en ce que** la résistance de frein (6) est disposée à la place de la position d'un module (3).

8. Batterie de traction selon l'une des revendications 1 à 7, **caractérisée en ce que** deux résistances de frein (6) ou plus sont présentes, lesquelles sont disposées réparties dans la batterie de traction (1) à l'intérieur de l'auge de batterie (4).
